# EUROPEAN PATENT APPLICATION

(11) **EP 2 983 140 A1**
(43) Date of publication of application: **10.02.2016**
(21) Application number: 14780249.0
(22) Date of filing: 10.03.2014
(51) Int. Cl.: G06T 19/00, G06F 3/048

(54) **DISPLAY CONTROL DEVICE, DISPLAY CONTROL METHOD AND PROGRAM**

(30) Priority: 04.04.2013 JP 2013078893
(71) Applicant: Sony Corporation, Tokyo 108-0075 (JP)
(72) Inventor: KASAHARA, Shunichi, Tokyo 108-0075 (JP); REKIMOTO, Junichi, Tokyo 141-0022 (JP)
(74) Representative: MFG Patentanwälte Meyer-Wildhagen Meggle-Freund Gerhard PartG mbB
(86) International application number: PCT/JP2014/056158
(87) International publication number: WO 2014/162824

(57) **Abstract**

Provided is a display control device including: a display control unit configured to control a display unit of a terminal device to display an image of a real space in which the terminal device is present. The display control unit selects an image to be displayed by the display unit from a first image which has continuity with the image of the real space viewed in a region other than the display unit and a second image which is generated based on a captured image of the real space and is independent from the image of the real space viewed in the region other than the display unit.

## Description

### Technical Field

The present disclosure relates to a display control device, a display control method, and a program.

### Background Art

In recent years, technology known as augmented reality (AR) through which users are presented with additional information that is superimposed on the real world has been noticed. Information presented to users in AR technology, which is also called annotation, can be visualized using virtual objects of various forms such as text, icons, animation, and the like. For example, Patent Literature 1 discloses a technology for realizing manipulation of virtual objects of such AR without impairing immersion of users in an AR space.

### Citation List

### Patent Literature

Patent Literature 1: JP 2012-212345A

### Summary of Invention

### Technical Problem

The AR technologies proposed in Patent Literature 1 and the like have recently been developed and it is difficult to say that sufficient technologies for utilizing AR in various phases have been proposed. For example, technologies for expressing AR spaces while transparently displaying real spaces have not been sufficiently proposed and only one such technology has been developed.

It is desirable to provide a novel and improved display control device, a novel and improved display control method, and a novel and improved program capable of improving a user's experiences when an AR space is expressed while transparently displaying a real space.

### Solution to Problem

According to the present disclosure, there is provided a display control device including: a display control unit configured to control a display unit of a terminal device to display an image of a real space in which the terminal device is present. The display control unit selects an image to be displayed by the display unit from a first image which has continuity with the image of the real space viewed in a region other than the display unit and a second image which is generated based on a captured image of the real space and is independent from the image of the real space viewed in the region other than the display unit.

According to the present disclosure, there is provided a display control method including: selecting, by a processor configured to control a display unit of a terminal device to display an image of a real space in which the terminal device is present, an image to be displayed by the display unit from a first image which has continuity with the image of the real space viewed in a region other than the display unit and a second image which is generated based on a captured image of the real space and is independent from the image of the real space viewed in the region other than the display unit.

According to the present disclosure, there is provided a program causing a computer configured to control a display unit of a terminal device to display an image of a real space in which the terminal device is present to realize: a function of selecting an image to be displayed by the display unit from a first image which has continuity with the image of the real space viewed in a region other than the display unit and a second image which is generated based on a captured image of the real space and is independent from the image of the real space viewed in the region other than the display unit.

### Advantageous Effects of Invention

According to an embodiment of the present disclosure described above, it is possible to improve a user's experiences when an AR space is expressed while transparently displaying a real space.

### Brief Description of Drawings

[FIG. 1] FIG. 1 is a diagram illustrating a schematic configuration of a system according to an embodiment of the present disclosure.
[FIG. 2] FIG. 2 is a diagram illustrating a schematic configuration of a device according to the embodiment of the present disclosure.
[FIG. 3A] FIG. 3A is a diagram illustrating an example in which captured images are shared according to the embodiment of the present disclosure.
[FIG. 3B] FIG. 3B is a diagram illustrating an example of an annotation input according to the embodiment of the present disclosure.
[FIG. 4] FIG. 4 is a diagram illustrating another example in which captured images are shared according to the embodiment of the present disclosure.
[FIG. 5A] FIG. 5A is a flowchart illustrating an example of a process of a technology usable according to the embodiment of the present disclosure.
[FIG. 5B] FIG. 5B is a flowchart illustrating another example of a process of a technology that can be used according to the embodiment of the present disclosure.
[FIG. 6] FIG. 6 is a diagram illustrating an example of the configuration of a wearable terminal according to the embodiment of the present disclosure.
[FIG. 7] FIG. 7 is a diagram illustrating an example of a merge view in a wearable terminal according to the embodiment of the present disclosure.
[FIG. 8] FIG. 8 is a diagram illustrating an example of a merge view in a wearable terminal according to the embodiment of the present disclosure.
[FIG. 9] FIG. 9 is a diagram illustrating an example of a camera view in the wearable terminal according to the embodiment of the present disclosure.
[FIG. 10] FIG. 10 is a diagram illustrating an example of a calibration procedure in the wearable terminal according to the embodiment of the present disclosure.
[FIG. 11] FIG. 11 is a diagram illustrating an example of a merge view in a tablet terminal according to the embodiment of the present disclosure.
[FIG. 12] FIG. 12 is a diagram illustrating an example of conversion display according to the embodiment of the present disclosure.
[FIG. 13] FIG. 13 is a diagram illustrating an example of conversion display according to the embodiment of the present disclosure.
[FIG. 14] FIG. 14 is a diagram illustrating an example of conversion display according to the embodiment of the present disclosure.
[FIG. 15] FIG. 15 is a diagram illustrating another example of the conversion display according to the embodiment of the present disclosure.
[FIG. 16] FIG. 16 is a diagram illustrating a first example of an annotation indication outside of a displayable range according to the embodiment of the present disclosure.
[FIG. 17] FIG. 17 is a diagram illustrating a first example of an annotation indication outside of a displayable range according to the embodiment of the present disclosure.
[FIG. 18] FIG. 18 is a diagram illustrating a first example of an annotation indication outside of a displayable range according to the embodiment of the present disclosure.
[FIG. 19] FIG. 19 is a diagram illustrating a second example of an annotation indication outside of a displayable range according to the embodiment of the present disclosure.
[FIG. 20] FIG. 20 is a diagram illustrating a second example of an annotation indication outside of a displayable range according to the embodiment of the present disclosure.
[FIG. 21] FIG. 21 is a diagram illustrating a third example of an annotation indication outside of a displayable range according to the embodiment of the present disclosure.
[FIG. 22] FIG. 22 is a diagram illustrating a third example of an annotation indication outside of a displayable range according to the embodiment of the present disclosure.
[FIG. 23] FIG. 23 is a diagram illustrating a fourth example of an annotation indication outside of a displayable range according to the embodiment of the present disclosure.
[FIG. 24] FIG. 24 is a diagram illustrating a fifth example of an annotation indication outside of a displayable range according to the embodiment of the present disclosure.
[FIG. 25] FIG. 25 is a diagram illustrating a sixth example of an annotation indication outside of a displayable range according to the embodiment of the present disclosure.

### Description of Embodiments

Hereinafter, preferred embodiments of the present disclosure will be described in detail with reference to the appended drawings. Note that, in this specification and the drawings, elements that have substantially the same function and structure are denoted with the same reference signs, and repeated explanation is omitted.

The description will be made in the following order.
1. Configurations of system and device
   1-1. Configuration of system
   1-2. Configuration of device
2. Sharing and interaction of real space images
   2-1. Concept of interaction
   2-2. Usable technologies
3. Display examples in wearable terminal
   3-1. Merge view
   3-2. Camera view
   3-3. Calibration
4. Display examples in tablet terminal
5. Conversion between merge view and camera view
6. Annotation indication outside of displayable range
7. Supplements

### (1. Configurations of system and device)

### (1-1. Configuration of system)

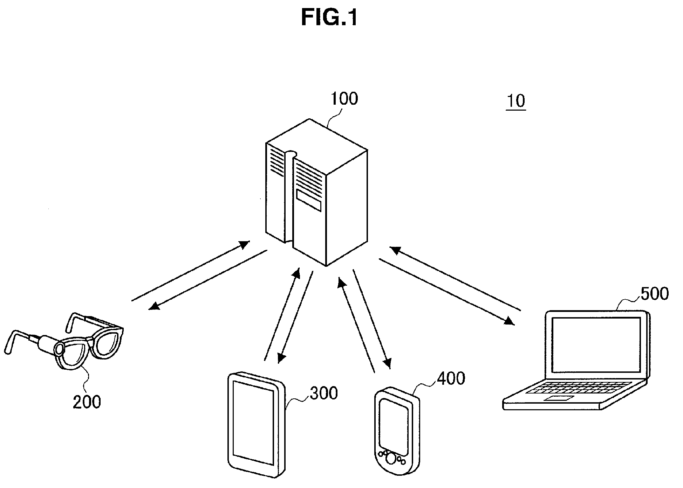

FIG. 1 is a diagram illustrating a schematic configuration of a system according to an embodiment of the present disclosure. Referring to FIG. 1, a system 10 includes a server 100 and clients 200 to 500.

The server 100 is a single server device or an aggregate of functions realized by a plurality of server devices connected by various wired or wireless networks for cooperation. The server 100 supplies services to the clients 200 to 700.

The clients 200 to 500 are terminal devices that are connected to the server 100 by various wired or wireless networks. The clients 200 to 500 are classified into the following (1) to (3) according to kinds of services supplied by the server 100.
(1) A device that includes an imaging unit such as a camera and supplies images of a real space to the server 100.
(2) A device that includes a display unit such as a display and a manipulation unit such as a touch panel, and that acquires an image supplied from the device (1) from the server 100, supplies the image to a user for the user to view the image, and receives an annotation input to an image by the user.
(3) A device that includes a display unit such as a display and displays an annotation of which an input is received by the device (2) in the real space.

The client 200 (hereinafter also simply referred to as a wearable terminal 200) is a wearable terminal. The wearable terminal 200 includes one or both of, for example, an imaging unit and a display unit and functions as one or both of the devices (1) to (3). In the illustrated example, the wearable terminal 200 is of a glasses type, but an embodiment of the present disclosure is not limited to this example as long as the wearable terminal has a form in which it can be worn on the body of a user. When the wearable terminal 200 functions as the device (1), the wearable terminal 200 includes, for example, a camera installed in a frame of glasses as the imaging unit. The wearable terminal 200 can acquire an image of a real space from a position close to the viewpoint of the user by the camera. The acquired image is transmitted to the server 100. When the wearable terminal 200 functions as the device (3), the wearable terminal 200 includes, for example, a display installed in a part or the whole of a lens portion of the glasses as a display unit. The wearable terminal 200 displays an image captured by the camera on the display and displays an annotation input by the device (2) so that the annotation is superimposed on the image. Alternatively, when the display is of a transparent type, the wearable terminal 200 may display the annotation so that the annotation is transparently superimposed on an image of the real world directly viewed by the user.

The client 300 (hereinafter also simply referred to as the tablet terminal 300) is a tablet terminal. The tablet terminal 300 includes at least a display unit and a manipulation unit and can function as, for example, the device (2). The tablet terminal 300 may further include an imaging unit and function as one or both of the devices (1) to (3). That is, the tablet terminal 300 can function as any of the devices (1) to (3). When the tablet terminal 300 functions as the device (2), the tablet terminal 300 includes, for example, a display as the display unit, includes, for example, a touch sensor on the display as the manipulation unit, displays an image supplied from the device (1) via the server 100, and receives an annotation input by the user with respect to the image. The received annotation input is supplied to the device (3) via the server 100. When the tablet terminal 300 functions as the device (1), the tablet terminal 300 includes, for example, a camera as the imaging unit as in the wearable terminal 200 and can acquire an image of a real space along a line extending from the user's line of sight when the user holds the tablet terminal 300 in the real space. The acquired image is transmitted to the server 100. When the tablet terminal 300 functions as the device (3), the tablet terminal 300 displays an image captured by the camera on the display and displays the annotation input by the device (2) (for example, another tablet terminal) so that the annotation is superimposed on the image. Alternatively, when the display is a transparent type, the tablet terminal 300 may display the annotation by transparently superimposing the annotation on an image of the real world directly viewed by the user.

The client 400 (hereinafter also simply referred to as the mobile phone 400) is a mobile phone (smartphone). Since the function of the mobile phone 400 in the system 10 is the same as that of the tablet terminal 300, the detailed description thereof will be omitted. Although not illustrated, for example, when a device such as a portable game device or a digital camera also includes a communication unit, a display unit, and a manipulation unit or an imaging unit, the device can function similarly to the tablet terminal 300 or the mobile phone 400 in the system 10.

The client 500 (hereinafter also simply referred to as the laptop PC 500) is a laptop personal computer (PC). The laptop PC 500 includes a display unit and a manipulation unit and functions as the device (2). In the illustrated example, since the laptop PC 500 is used basically in a fixed manner, the laptop PC 500 is treated as an example of a device that does not function as the device (1). Although not illustrated, for example, a desktop PC or a television can also function as the laptop PC 500. The laptop PC 500 includes a display as the display unit, includes a mouse or a keyboard as the manipulation unit, displays an image supplied from the device (1) via the server 100, and receives an annotation input by the user with respect to the image. The received annotation input is supplied to the device (3) via the server 100.

The system according to the embodiment of the present disclosure has been described above. As illustrated in FIG. 1, the system 10 according to the embodiment includes the device (1) (the wearable terminal 200, the tablet terminal 300, or the mobile phone 400) capable of acquiring an image of a real space, the device (2) (the tablet terminal 300, the mobile phone 400, or the laptop PC 500) capable of supplying the image of the real space to the user for the user to view and receiving an annotation input for an image by the user, and the device (3) (the wearable terminal 200, the tablet terminal 300, or the mobile phone 400) capable of displaying an annotation in the real space.

The server 100 realizes a function of acquiring an image of the real space by cooperating with each of the foregoing devices and supplying the image to the user for the user (for example, a user not located in the real space) to view the image, receiving an annotation input to an image by the user, and displaying the input annotation in the real space. For example, the function enables interaction between users using an AR technology so that a second user can view an image of the real space in which a first user is located and an annotation in which the second user is added to the image is displayed in the real space to be viewed by the first user.

Alternatively, the function of the device (2) may be realized by the server 100 in the system 10. In this case, the server 100 generates an annotation for an image supplied from the device (1) based on positional information or object information registered in advance and transmits information regarding the annotation to the device (3). For example, when the device (1) and the device (3) are the same, transmission and reception of an image and an annotation are completed between the client and the server 100.

### (1-2. Configuration of device)

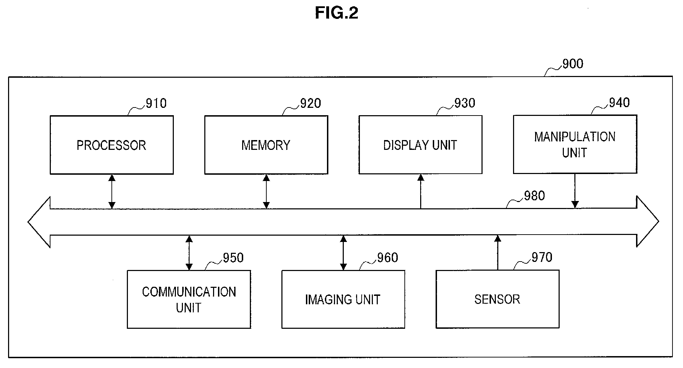

FIG. 2 is a diagram illustrating a schematic configuration of the device according to the embodiment of the present disclosure. Referring to FIG. 2, a device 900 includes a processor 910 and a memory 920. The device 900 can further include a display unit 930, a manipulation unit 940, a communication unit 950, an imaging unit 960, or a sensor 970. These constituent elements are connected to each other by a bus 980. For example, the device 900 can realize a server device configuring the server 100 and any of the clients 200 to 500 described above.

The processor 910 is, for example, any of the various processors such as a central processing unit (CPU) and a digital signal processor (DSP) and realizes, for example, various functions by performing an operation such as arithmetic calculation and control according to programs stored in the memory 920. For example, the processor 910 realizes a control function of controlling all of the devices, the server 100 and the clients 200 to 700 described above. For example, the processor 910 performs display control to realize display of an AR image of an example to be described below in the wearable terminal 200, the tablet terminal 300, or the mobile phone 400.

The memory 920 is configured as a storage medium such as a semiconductor memory or a hard disk and stores programs and data with which the device 900 performs a process. The memory 920 may store, for example, captured image data acquired by the imaging unit 960 or sensor data acquired by the sensor 970. Some of the programs and the data described in the present specification may be acquired from an external data source (for example, a data server, a network storage, or an externally attached memory) without being stored in the memory 920.

For example, the display unit 930 is provided in a client that includes the above-described display unit. The display unit 930 may be, for example, a display that corresponds to the shape of the device 900. For example, of the above-described examples, the wearable terminal 200 can include, for example, a display with a shape corresponding to a lens portion of glasses. The tablet terminal 300, the mobile phone 400, or the laptop PC 500 can include a flat type display provided in each casing.

For example, the manipulation unit 940 is provided in a client that includes the above-described manipulation unit. The manipulation unit 940 is configured in a touch sensor (forming a touch panel along with a display) provided on a display or a pointing device such as a touch pad or a mouse in combination with a keyboard, a button, a switch, or the like, as necessary. For example, the manipulation unit 940 specifies a position in an image displayed on the display unit 930 by a pointing device and receives a manipulation from a user inputting any information at this position using a keyboard, a button, a switch, or the like. Alternatively, the manipulation unit 940 may specify a position in an image displayed on the display unit 930 by a pointing device and further receive a manipulation of a user inputting any information at this position using the pointing device.

The communication unit 950 is a communication interface that mediates communication by the device 900 with another device. The communication unit 950 supports any wireless communication protocol or any wired communication protocol and establishes communication connection with another device. In the foregoing example, the communication unit 950 is used to transmit an image of a real space captured by a client or input annotation information to the server 100 and transmit an image of the real space or annotation information from the server 100 to a client.

The imaging unit 960 is a camera module that captures an image. The imaging unit 960 images a real space using an image sensor such as a charge coupled device (CCD) or a complementary metal oxide semiconductor (CMOS) and generates a captured image. A series of captured images generated by the imaging unit 960 forms a video. The imaging unit 960 may not necessarily be in a part of the device 900. For example, an imaging device connected to the device 900 in a wired or wireless manner may be treated as the imaging unit 960. The imaging unit 960 may include a depth sensor that measures a distance between the imaging unit 960 and a subject for each pixel. Depth data output from the depth sensor can be used to recognize an environment in an image obtained by imaging the real space, as will be described below.

The sensor 970 can include various sensors such as a positioning sensor, an acceleration sensor, and a gyro sensor. A measurement result obtained from the sensor 970 may be used for various uses such as support of recognition of the environment in the image obtained by imaging the real space, acquisition of data specific to a geographic position, and detection of a user input. The sensor 970 can be provided in a device including the imaging unit 960, such as the wearable terminal 200, the tablet terminal 300, or the mobile phone 400 in the foregoing example.

### (2. Sharing and interaction of real space images)

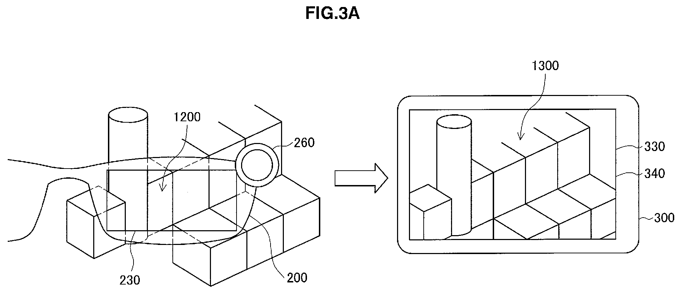

Next, a basic concept of the interaction according to the embodiment of the present disclosure will be described with reference to FIGS. 3A to 4.

### (2-1. Concept of interaction)

FIG. 3A is a diagram illustrating an example in which captured images are shared according to the embodiment of the present disclosure. In the illustrated example, an image of the real space captured by the camera 260 (imaging unit) of the wearable terminal 200 is delivered to the tablet terminal 300 via the server 100 in a streaming manner and is displayed as an image 1300 on the display 330 (display unit). At this time, in the wearable terminal 200, the captured image of the real space is displayed on the display 230 (display unit) or the image of the real space is transmitted through the display 230 to be directly viewed. The image (including a transmitted and viewed background) displayed on the display 230 in this instance is referred to as an image 1200 below.

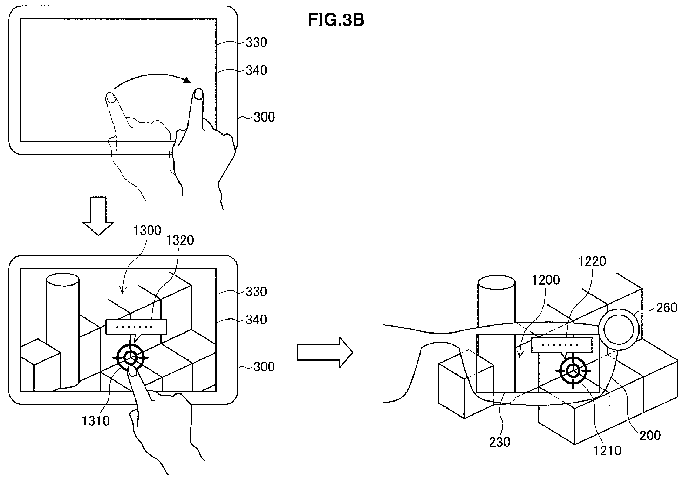

FIG. 3B is a diagram illustrating an example of an annotation input according to the embodiment of the present disclosure. In the tablet terminal 300, a touch sensor 340 is provided on the display 330 (manipulation unit), and thus a touch input of the user on the image 1300 displayed on the display 330 can be acquired. In the illustrated example, the touch input of the user pointing to a certain position in the image 1300 is acquired by the touch sensor 340, and thus a pointer 1310 is displayed at this position. For example, text input using a separately displayed screen keyboard or the like is displayed as a comment 1320 in the image 1300. The pointer 1310 and the comment 1320 are transmitted as annotations to the wearable terminal 200 via the server 100.

In the wearable terminal 200, annotations input with the tablet terminal 300 are displayed as a pointer 1210 and a comment 1220 in the image 1200. Positions at which these annotations are displayed in the image 1200 correspond to positions of the real space in the image 1300 displayed with the tablet terminal 300. Thus, interaction is established between the wearable terminal 200 which is a transmission side (streaming side) device and the tablet terminal 300 which is a reception side (viewer side) device. A technology which can be used in this example to cause display positions of annotations to correspond to each other between devices or to continuously display the annotations will be described below.

FIG. 3B is a diagram illustrating another example in which captured images are shared according to the embodiment of the present disclosure. In the illustrated example, an image of the real space captured by a camera (an imaging unit which is not illustrated since the imaging unit is located on the rear surface side) of a tablet terminal 300a is delivered to a tablet terminal 300b in a streaming manner and is displayed as an image 1300b on a display 330b (display unit). At this time, in the tablet terminal 300a, the captured image of the real space is displayed on the display 330a or the image of the real space is transmitted through the display 330a to be directly viewed. At this time, the image (including a transmitted and viewed background) displayed on the display 330a is referred to as an image 1300a below. Even in the illustrated example, annotations input for the image 1300b with the tablet terminal 300b are displayed in the image 1300a, and thus interaction is established between the tablet terminal 300a which is a transmission side (streaming side) device and the tablet terminal 300b which is a reception side (viewer side) device.

The sharing of the image of the real space and the interaction between users based on the sharing of the image according to the embodiment are not limited to the foregoing examples related to the wearable terminal 200 and the tablet terminal 300, but can be established using any devices as a transmission side (streaming side) device and a reception side (viewer side) device as long as functions (for example, the functions of the above-described devices (1) to (3)) of the mobile phone 400 or the laptop PC 500 described above are realized.

As described above, the embodiment is not limited to the example in which interaction between users occurs, but also includes a case in which an annotation is automatically generated by the server 100. Conversion of a display image to be described below can be performed with or without annotation information.

### (2-2. Usable technologies)

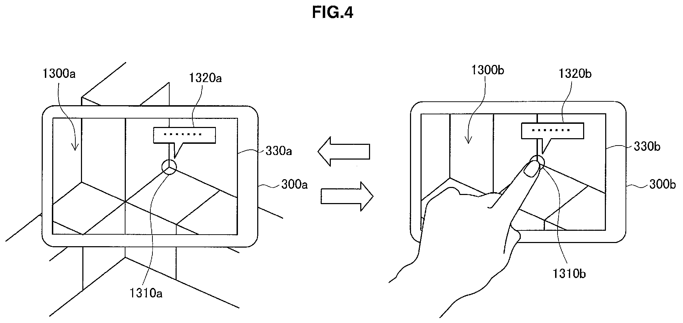

In the embodiment, several technologies are used to realize the interaction and the sharing of the image of the real space described above. First, in the embodiment, space information is added to transmitted image data of the real space in the transmission side device. The space information is information that enables movement of the imaging unit (the camera 260 of the wearable terminal 200 in the example of FIGS. 3A and 3B and the camera of the tablet terminal 300a in the example of FIG. 4) of the transmission side device in the real space to be estimated.

For example, the space information can be an environment recognition matrix recognized by a known image recognition technology such as a structure form motion (SfM) method or a simultaneous localization and mapping (SLAM) method. For example, the environment recognition matrix indicates a relative position and posture of a coordinate system of a criterion environment (real space) with respect to a coordinate system unique to the transmission side device. For example, when the SLAM method is used, a processor of the transmission side device updates the position, posture, speed, and angular velocity of the device and a state variable including the position of at least one feature point included in a captured image, for each frame of the captured image based on the principle of an extended Kalman filter. Thus, the position and posture of the criterion environment for which the position and posture of the device is used as a criterion can be recognized using an input image from a single-lens camera. SLAM is described in detail in, for example, "Real-Time Simultaneous Localization and Mapping with a Single Camera" (Andrew J. Davison, Proceedings of the 9th IEEE International Conference on Computer Vision Volume 2, 2003, pp. 1403-1410).

Further, any information that indicates a relative position and posture in the real space of the imaging unit may be used as the space information. For example, the environment recognition matrix may be recognized based on depth data from a depth sensor provided in the imaging unit. The environment recognition matrix may also be recognized based on output data from an environment recognition system such as an infrared ranging system or a motion capture system. An example of such a technology is described in, for example, Real-time 3D Reconstruction and Interaction Using a Moving Depth Camera by S.Izadi, et al, KinectFusion in ACM Symposium on User Interface Software and Technology, 2011. An embodiment of the present disclosure is not limited thereto, but any of the known various technologies can be used to generate the space information.

Alternatively, the space information may be generated by specifying a relative positional relation between image frames through stitching analysis of a series of frame images obtained by imaging the real space. In this case, the stitching analysis can be 2-dimensional stitching analysis in which each frame image is posted to a base plane or 3-dimensional stitching analysis in which each frame image is posted to any position in a space.

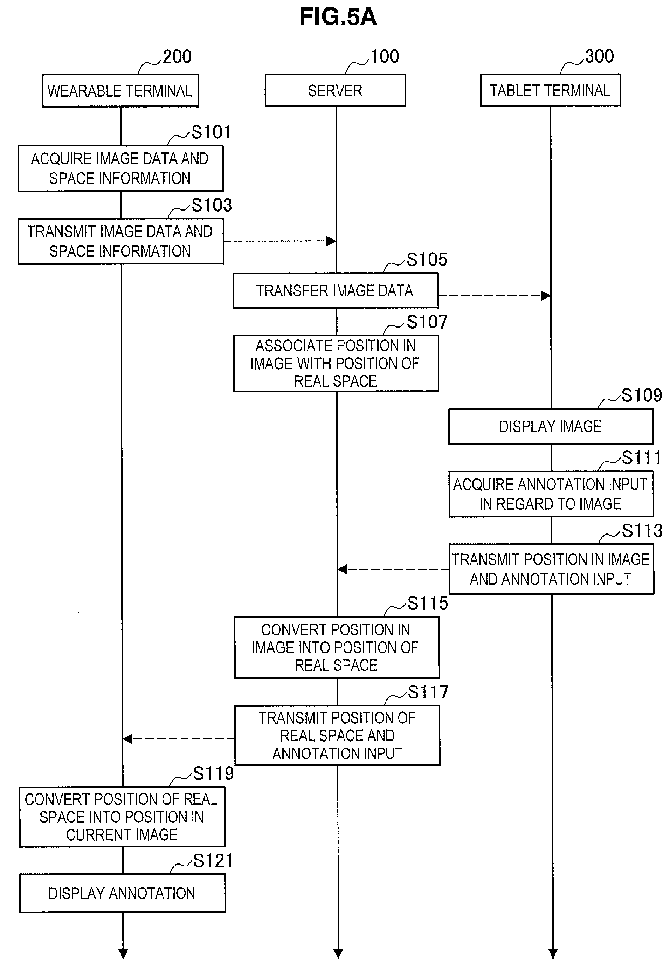

Hereinafter, examples of processes of a transmission side device, a reception side device, and a server related to the foregoing technology will be described using the example of FIGS. 3A and 3B with reference to the flowchart of FIG. 5A. The foregoing technology can be applied to a combination of any devices in the system 10 described above, regardless of the example of FIGS. 3A and 3B.

First, in the wearable terminal 200 (the transmission side device), the imaging unit acquires the image data of the real space and the information acquired by the imaging unit or the sensor is processed by the processor as necessary to generate space information (step S101). The image data and the space information can be associated with each other and are transmitted from the communication unit of the wearable terminal 200 to the server 100 (step S103). In the server 100, the communication unit receives the image data and the space information from the wearable terminal 200 and transfers the image data to the tablet terminal 300 (the reception side device) (step S105). In the server 100, the processor uses the space information to associate a position in the received image with a position of the real space in which the wearable terminal 200 is located (step S107).

In the tablet terminal 300, the communication unit receives the image data from the server 100 and the processor displays the image 1300 on the display 330 based on the received image data (step S109). Here, when an annotation input of the user in regard to the image 1300 is acquired by the touch sensor 340 (step S111), the processor transmits the annotation input from the communication unit to the server 100 in association with the position (for example, the position of the pointer 1310) in the image 1300 (step S113).

In the server 100, when the communication unit receives the information regarding the annotation input and the position in the image transmitted from the tablet terminal 300, the processor converts the position in the image included in the received information into a position of the real space (step S115). The annotation input associated with the position of the real space after the conversion is transmitted from the communication unit to the wearable terminal 200 (step S117).

In the wearable terminal 200, the communication unit receives the information regarding the annotation input and the position of the real space from the server 100, and the processor converts the position of the real space associated with the annotation information into a position in the image 1200 currently displayed on the display 230 using the space information (step S119) and displays an annotation (for example, the pointer 1210 or the comment 1220) at the position (step S121).

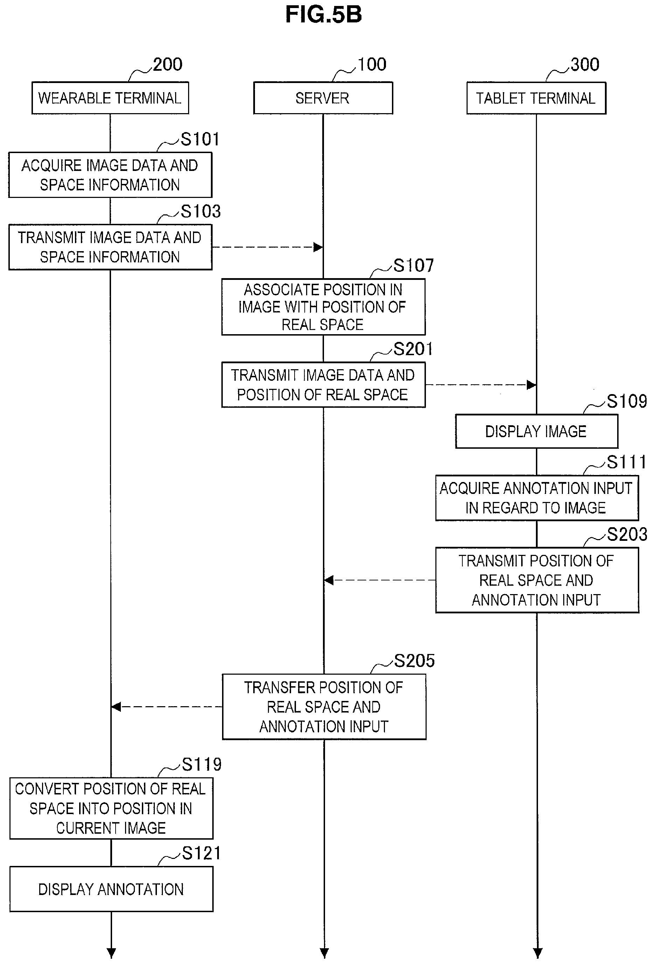

Another example of the foregoing process is illustrated in FIG. 5B. In this example, the processor of the server 100 associates a position in the image with a position of the real space, and then the communication unit transmits information regarding the position of the real space included in the image along with the image data to the tablet terminal 300 (step S201). In the tablet terminal 300, the image is displayed on the display 330 (step S109), as in the foregoing example of FIG. 5A. However, the annotation input is transmitted in association with the position of the real space received in step S201 rather than the position in the image (step S203). Accordingly, in the server 100, the communication unit may transfer information regarding the annotation input associated with the position of the real space to the wearable terminal 200 (step S205).

### (First advantageous effect)

In the above-described technology, there are several advantageous effects. For example, an image of the real space is acquired by the wearable terminal 200, and then an annotation for the image is input by the tablet terminal 300. Further, a time difference occurs until the annotation is transmitted to the wearable terminal 200 in many cases.

Accordingly, when an annotation is transmitted and received using a position in the image as a criterion, a display range of the image 1200 displayed with the wearable terminal 200 is changed due to movement of a user or the device during the foregoing time difference. Therefore, the annotation transmitted from the tablet terminal 300 is displayed at a different position from a position intended by the user of the tablet terminal 300 viewing the image 1300 in the wearable terminal 200.

However, when the foregoing technology is applied, an annotation can be associated with a position of a real space. Therefore, irrespective of a change in the display range of the image 1200, an annotation can be displayed at a position (for example, a position corresponding to a specific object in the real space) intended by the user of the wearable terminal 300 viewing the image 1300 even in the wearable terminal 200.

### (Second advantageous effect)

For example, when the image 1200 of the real space displayed with the wearable terminal 200 is coordinated with the image of the real space transmitted through the display 230 and viewed directly or viewed outside the display 230 and is displayed on the display 230, the range of the image 1200 can be narrower than the range of the image of the real space imaged by the camera 260 of the wearable terminal 200 (that is, the range of a captured image is broader than a range viewed by the user of the wearable terminal 200) in some cases.

In such cases, the range of the image 1300 displayed on the display 330 of the tablet terminal 300 becomes broader than the range of the image 1200 of the wearable terminal 200, so that the user of the tablet terminal 300 can input an annotation outside of the image 1200, that is, in a range which is not viewed by the user of the wearable terminal 200. Accordingly, when the annotation is transmitted and received using a position in the image as a criterion, an input is possible in the tablet terminal 300, but an annotation not displayed in the image 1200 of the wearable terminal 200 may be generated.

In contrast, when the foregoing technology is applied, an annotation can be associated with a position of the real space. Therefore, even for an annotation at a position which is not in the display range of the image 1200 at a time point of reception in the server 100 or the wearable terminal 200, the image 1200 can be displayed, for example, when the display range of the image 1200 is subsequently changed and include the position of the annotation.

In the foregoing technology, the advantageous effects are not limited to the above-described advantageous effects, but other advantageous effects can be obtained according to use situations. Such advantageous effects can be expressed clearly or suggested in the following description.

### (3. Display examples in wearable terminal)

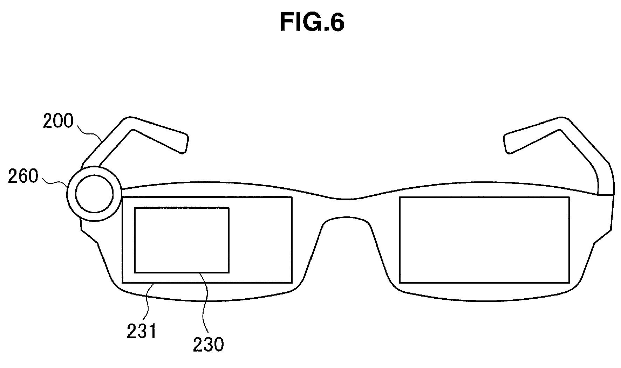

Next, a display example in the wearable terminal according to the embodiment of the present disclosure will be described with reference to FIGS. 6 to 9.

FIG. 6 is a diagram illustrating an example of the configuration of the wearable terminal according to the embodiment of the present disclosure. Referring to FIG. 6, the wearable terminal 200 includes the display 230 and the camera 260. Here, the display 230 can be disposed in a part of or the entire surface of a lens portion 231 of the glasses-shaped wearable terminal 200.

For example, the display 230 may transmit an image of a real space viewed directly via the lens portion 231, superimpose the image on a transmitted image, and display information such as an annotation. Alternatively, the display 230 may display an image obtained by processing images captured by the camera 260 so that the image is continuous in the image of the real space viewed directly via the lens portion 231 and may display information such as an annotation on this image. For example, when the display 230 is disposed on the entire surface of the lens portion 231, the display 230 may display the image of the real space so that the image of the real space is continuous in an image of a real space outside a frame of the periphery of the lens portion 231. In any of the cases described above, the display 230 displays an image based on the captured image so that the image is continuous in the image of the real space viewed from the outside of the display 230. The display 230 may display an image independent from the image of the real space viewed from the outside of the display 230. Hereinafter, several display examples of the display 230 will be further described.

### (3-1. Merge view)

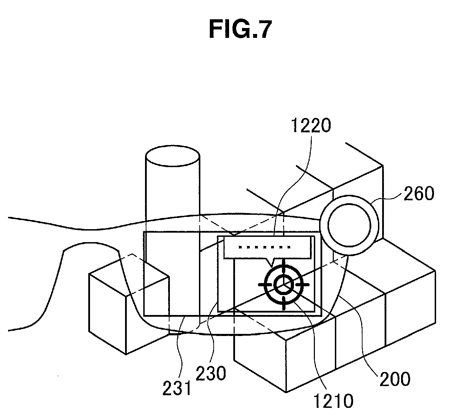

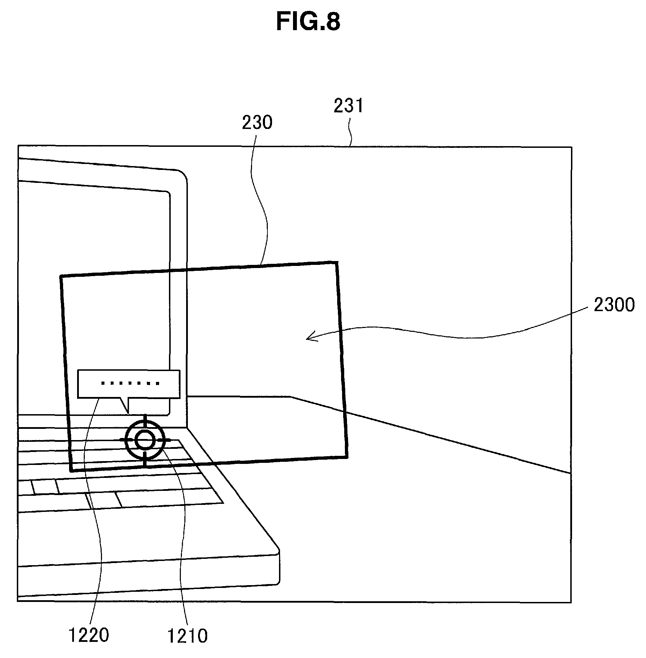

FIGS. 7 and 8 are diagrams illustrating examples of a merge view in a wearable terminal according to the embodiment of the present disclosure. In the illustrated examples, annotations (a pointer 1210 and a comment 1220) for the position of a real space or an object of the real space are displayed even when continuous images are displayed on the image of the real space viewed via another lens portion 231 in a region of the display 230 (including a case in which the continuous images are transmitted). At this time, display of the display 230 is immersed in the image of the surrounding real space. Accordingly, in the present specification, a view observed by the display of the display 230 is also referred to as a merge view.

In FIG. 7, a first example of the merge view is illustrated. In the illustrated example, the display 230 transmits the image of the real space as in the other lens portion 231. Accordingly, even in the region of the display 230, the user can view the image of the real space as in the other lens portion 231. Further, the display 230 displays the annotations (the pointer 1210 and the comment 1220) by superimposing the annotations on the transmitted image of the real space. Accordingly, the user can view the annotations for the position of the real space or the object in the real space.

In FIG. 8, a second example of the merge view is illustrated. In the illustrated example, the display 230 displays an image 2300 of a real space so that the image is continuous in the image of the real space viewed via the other lens portion 231. The annotations (the pointer 1210 and the comment 1220) are further displayed in the image 2300. Accordingly, the user can view the annotations for the position of the real space or the object in the real space, as in the foregoing example of FIG. 7.

In the display of the above-described merge view, the above-described space information can be used to specify the position of the real space which is, for example, an annotation target. For example, when a distance between the wearable terminal 200 and the object or the position of the real space which is a target can be calculated using the space information, disparity suitable for the annotation indication displayed on the display 230 for both eyes can be set. Further, to coordinate the position of the image of the real space captured by the camera 260 with the position of the image of the real space viewed by the user, a calibration procedure to be described below may be performed in advance.

### (3-2. Camera view)

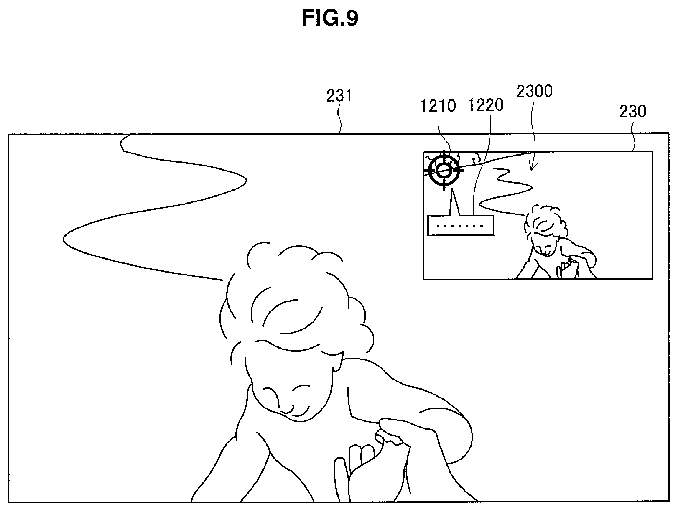

FIG. 9 is a diagram illustrating an example of a camera view in the wearable terminal according to the embodiment of the present disclosure. In the illustrated example, in the region of the display 230, the image 2300 of the real space captured by the camera 260 is displayed independently from the image of the real space viewed via the other lens portion 231, and the annotations (the pointer 1210 and the comment 1220) for the position of the real space or the object of the real space are displayed in the image 2300. At this time, in the display of the display 230, an image captured by the camera 260 is displayed irrespective of the image of the surrounding real space. Accordingly, in the present specification, a view observed through the display of the display 230 is also referred to as a camera view.

In the illustrated example, unlike the foregoing example of FIGS. 6 to 8, the display 230 is disposed on the upper right of the lens portion 231, but this difference is essentially meaningless and the disposition of the display 230 may be realized as in the foregoing example. Apart from the image of the real space viewed via the lens portion 231, the display 230 displays the image 2300 of the real space captured by the camera 260. In the illustrated example, the range of the real space viewed via the lens portion 231 is broader than the range of the real space captured by the camera 260. Accordingly, the real space with the range broader than that viewed by the user via the lens portion 231 is displayed in the image 2300. The annotations (the pointer 1210 and the comment 1220) displayed in the image 2300 are set outside of the range viewed via the lens portion 231.

In the display of the camera view described above, for example, the annotations can also be associated with positional information of the captured image. However, when the fact that the position of the camera 260 is also changed every moment is considered, the position of the real space which is an annotation target is preferably specified using the above-described space information. When the image captured by the camera 260 is displayed as the image 2300 without change, the calibration procedure to be described below is not necessary. However, as will be described below, for example, the calibration procedure can be performed when display is switched between the camera view and the merge view.

### (3-3. Calibration)

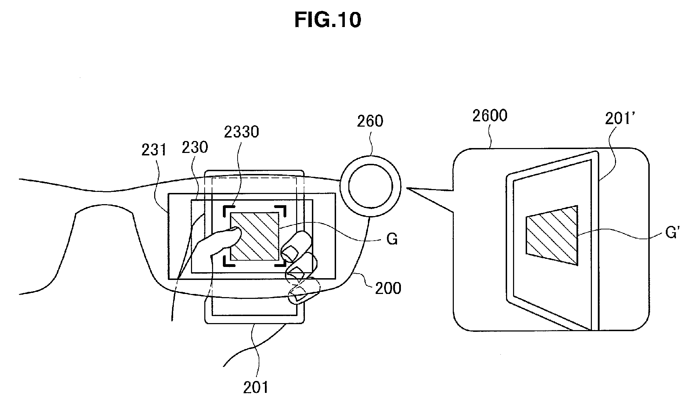

FIG. 10 is a diagram illustrating an example of a calibration procedure in the wearable terminal according to the embodiment of the present disclosure. In the illustrated example, the user views a graphic G displayed in another terminal device 201 via the wearable terminal 200. At this time, a criterion line 2330 with a predetermined shape and a predetermined position is displayed on the display 230 included in the lens portion 231, and the user moves and rotates the terminal device 201 so that the graphic G matches the criterion line 2330. When the graphic G almost matches the criterion line 2330, the user performs a predetermined decision manipulation on the manipulation unit of the wearable terminal 200. Alternatively, the user may perform the predetermined decision manipulation on the manipulation unit of the terminal device 201 and information regarding the predetermined decision manipulation may be transmitted from the communication unit of the terminal device 201 to the server 100 or the wearable terminal 200 via the server 100.

When the foregoing decision manipulation is performed, the processor of the wearable terminal 200 or the server 100 decides a correction parameter of the image captured by the camera 260 in the wearable terminal 200. The correction parameter is a parameter indicating that a captured image 2600 can be coordinated with the image of the real space viewed directly by the user of the wearable terminal 200 and can be displayed in the merge view when the captured image 2600 of the real space captured by the camera 260 is deformed in a certain way. For example, the processor specifies a position and a posture of the display of the terminal device 201 in the real space based on the space information supplied from the wearable terminal 200 and decides the correction parameter based on the position and the posture. That is, the processor decides the correction parameter by comparing the shape or size of the graphic G included in the image of the real space viewed in the wearable terminal 200 to the shape or size of a graphic G' included in the image captured by the camera 260.

For example, as in the illustrated example, when the graphic G viewed directly by the user is a square substantially matching the criterion line 2330 and the graphic G' displayed in a terminal device 201' pictured in the captured image 2600 is a trapezoid, the correction parameter may be set such that the shape of the graphic G' is converted into a square. Further, when the graphic G viewed directly by the user substantially matches the criterion line 2330 and is located near the center of the display 230 and the graphic G' pictured in the captured image 2600 is deviated from the center, the correction parameter may be set such that the graphic G' is moved to the center.

The foregoing calibration procedure is not necessarily performed, for example, when a positional relation between the camera 260 and the display 230 of the wearable terminal 200 is more or less fixed and an individual difference in a positional relation between the display 230 and the viewpoint of the user can be neglected. However, the calibration procedure is effective, for example, when the position or angle of the camera 260 is variable and the positional relation between the camera 260 and the display 230 is changeable or the foregoing individual difference may not be neglected.

The graphic G used for the calibration may not necessarily be displayed electrically in the terminal device. For example, the graphic G may be printed on a sheet or the like. Further, any shape or size of the graphic G may be used as long as the direction or angle can be identified. In the foregoing example, the user moves and rotates a medium displaying the graphic G (including a case in which the graphic G is printed) so that the graphic G matches the criterion line 2330. However, in another example, the medium displaying the graphic G may be fixed and the user wearing the wearable terminal 200 may move so that the graphic G matches the criterion line 2330.

### (4. Display examples in tablet terminal)

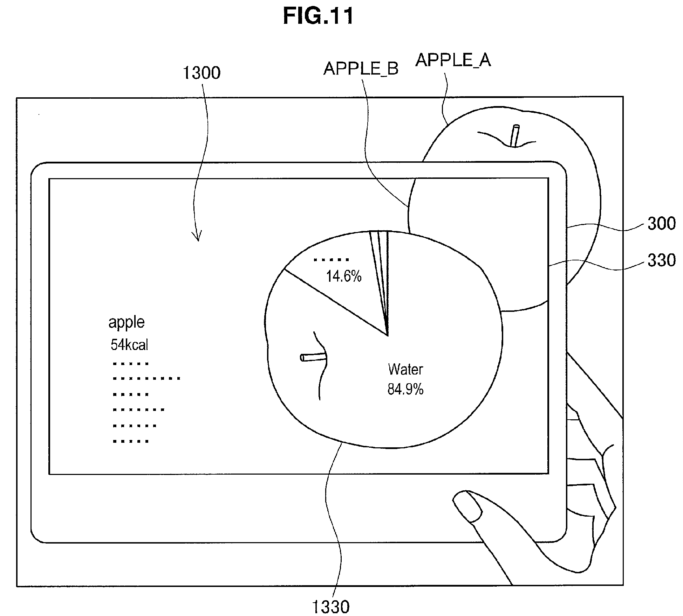

Next, a display example in the tablet terminal according to the embodiment of the present disclosure will be described with reference to FIG. 11.

FIG. 11 is a diagram illustrating an example of a merge view in the tablet terminal according to the embodiment of the present disclosure. In the illustrated example, an annotation 1310 for the position of the real space or the object of the real space is displayed on a display 330 when an image 1300 that is continuous in the image of the real space viewed on an opposite side to the tablet terminal 300 is displayed on the display 330 of the tablet terminal 300 (including a case in which the image 1300 is transmitted). For example, the image of the real space included in the image 1300 may be displayed by processing an image captured by the camera (not illustrated since the camera is located on the rear surface side) of the tablet terminal 300. Alternatively, the image of the real space may be displayed in such a manner that the image of the real space on the rear surface side is transmitted by the display 330.

In the illustrated example, the annotation 1310 in regard to an apple in the real space is displayed and indicates components of the apple. For the apple, an image APPLE_B of the apple is displayed in the image 1300 of the display 330 so that the image APPLE_B is continuous in an image APPLE_A of the apple viewed on the opposite side to the tablet terminal 300. A view observed through display in the tablet terminal 300 can also be said to be a merge view, as in the foregoing example of the wearable terminal 200, since the display of the display 330 is immersed in the image of the surrounding real space.

On the other hand, although not illustrated, when the image of the real space captured by the camera of the tablet terminal 300 is displayed on the display 330 of the tablet terminal 300 independently of the image of the real space viewed on the opposite side to the tablet terminal 300, a view observed through display in the tablet terminal 300 can be said to be a camera view. In this case, for example, in the real space viewed on the opposite side to the tablet terminal 300, a visible range may be estimated based on an average viewing angle of the user. An annotation can be set outside of the visible range, for example, when the range of the real space captured by the camera of the tablet terminal 300 is broader than the estimated visible range or the annotation can be associated with the position of the real space using the space information.

In the case of the tablet terminal 300, the calibration procedure can also be performed as in the foregoing case of the wearable terminal 200. For example, the tablet terminal 300 functions as a display capable of realizing a merge view when the user holds the tablet terminal 300 in a real space. Therefore, a positional relation between a viewpoint of the user and the display 330 can be changed more variously than in the case of the wearable terminal 200. Accordingly, when the merge view can be realized by the tablet terminal 300, the above-described calibration procedure can be effective.

### (5. Conversion between merge view and camera view)

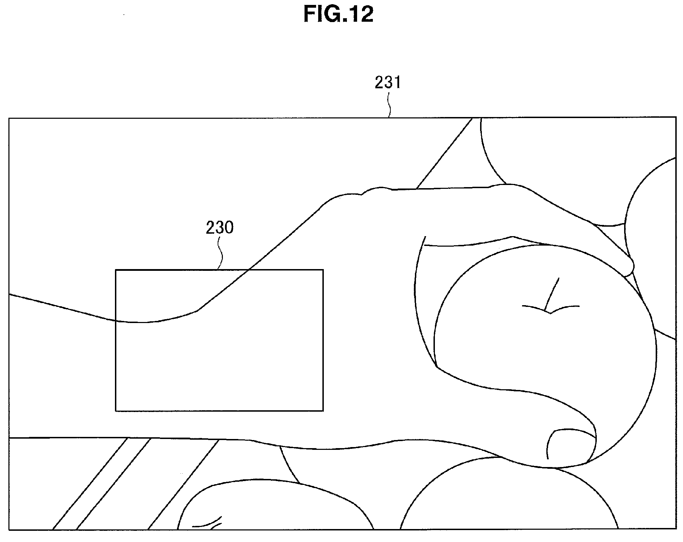

Next, conversion between a merge view and a camera view according to the embodiment of the present disclosure will be described with reference to FIGS. 12 to 15. The merge view and the camera view are, for example, two kinds of views supplied by the display of the display 230 of the wearable terminal 200, as described in the foregoing example. In the following example, conversion between the merge view and the camera view by the display 230 of the wearable terminal 200 will be described as an example. However, an embodiment of the present disclosure is not limited to this example. For example, since the display of the merge view and the camera view is also possible in the tablet terminal 300, as described above, the views can be switched similarly.

FIGS. 12 to 14 are diagrams illustrating an example of conversion display according to the embodiment of the present disclosure. In a state illustrated in FIG. 12, an image 2300a obtained by processing an image captured by the camera 260 is displayed on the display 230 of the wearable terminal 200 so that the image 2300a is continuous in the image of the real space viewed via the surrounding lens portion 231. Here, no annotation is displayed in the image 2300a. For example, when no annotation is set in regard to the captured image, the merge view may be displayed as in the illustrated example.

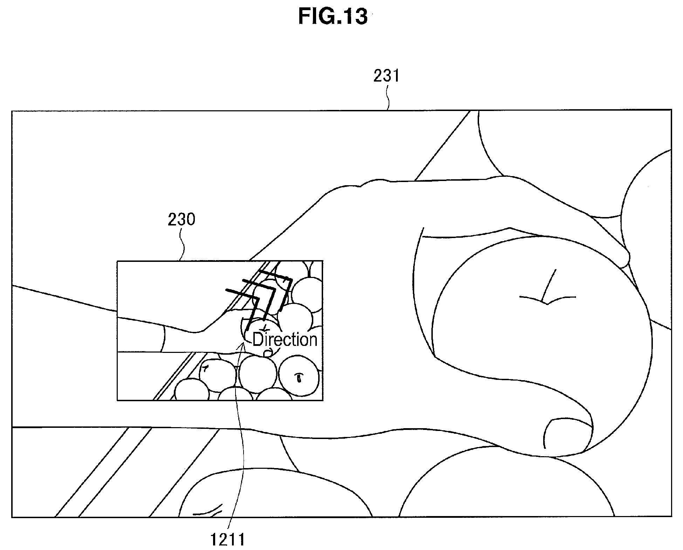

In a state illustrated in FIG. 13, for example, an annotation is input to an image captured by the camera 260 by a user of another terminal device or the server 100. The position of the real space which is an annotation target is included in the range of the image captured by the camera 260, but is not included in a range which can be directly viewed via the lens portion 231 by the user. Hence, the processor of the wearable terminal 200 changes a view to be displayed from the merge view to the camera view by switching the display of the display 230 from the image 2300a to an image 2300b and displays an annotation 1211 in the image 2300b. Accordingly, the user can view the annotation 1211 that is not in the range which can be directly viewed by the user.

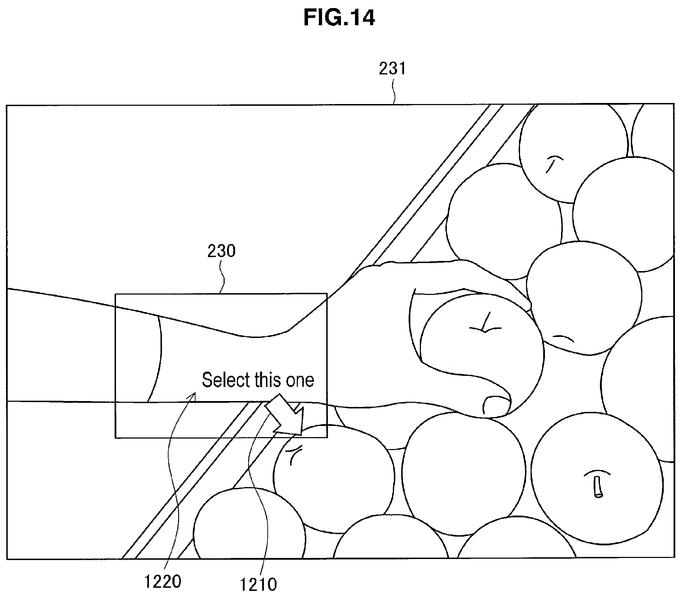

Even in a state illustrated in FIG. 14, for example, an annotation is input to an image captured with the camera 260 by a user of another terminal device or the server 100. An object (an apple on the lower right side of the display 230) of the real space which is an annotation target is included in the range of the image captured by the camera 260 and is also included in a range which can be directly viewed by the user via the lens portion 231. Hence, the processor of the wearable terminal 200 changes a view to be displayed from the camera view to the merge view by converting the display of the display 230 into the image 2300a again and displays the annotations (the pointer 1210 and the comment 1220) in the image 2300a. Accordingly, the user can view the annotations in the image of the real space which can be directly viewed by the user.

Thus, in the embodiment, the display by the display 230 can be switched between the merge view and the camera view depending on whether the object or the position of the real space which is the annotation target is included in the visible range. When the object or the position of the real space which is the annotation target is included in the visible range but it is difficult to display the annotation from the positional relation with the display 230, the camera view can be selected. The conversion between the merge view and the camera view may be displayed with, for example, an animation in which the range of the image 2300 displayed on the display 230 is gradually changed.

The merge view and the camera view may be switched automatically as in the foregoing example or may be switched according to a manipulation input of the user. Accordingly, even when the object or the position of the real space which is the annotation target is included in the visible range, the camera view may be displayed. Even when the object or the position of the real space which is the annotation target is not included in the visible range or no annotation is set, the camera view is displayed in some cases.

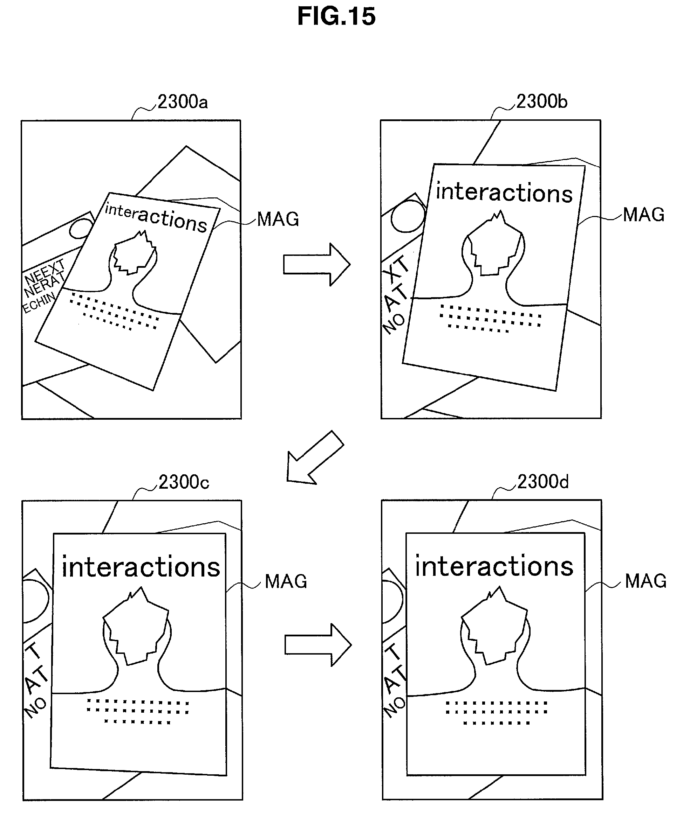

FIG. 15 is a diagram illustrating another example of the conversion display according to the embodiment of the present disclosure. In the example of FIG. 15, the image 2300a displayed on the display 230 is continuously changed to images 2300b, 2300c, and 2300d. The image 2300d in which a magazine (MAG) obliquely pictured in the image 2300a is aligned and zoomed in on is displayed through the series of display.

Here, the image 2300a can be, for example, an image displayed in the above-described merge view. That is, the image 2300a is display that is continuous in the image of the real space directly viewed in the surroundings of the display 230 and the magazine (MAG) is obliquely shown in the viewed real space. On the other hand, the image 2300d in which the magazine (MAG) that is aligned by deformation and expansion is displayed by processing the image captured by the camera 260 is independent from the image of the real space directly viewed in the surroundings of the display 230 in at least the display region of the magazine (MAG). Accordingly, the image 2300d can be an image displayed as the above-described camera view.

A region other than the magazine (MAG) in the image 2300 may be deformed and expanded together with the display of the magazine (MAG) as in the illustrated example or display that is continuous in the image of the real space directly viewed in the surroundings of the display 230 may be maintained without being influenced by the deformation and expansion of the magazine (MAG).

The display as in the foregoing example is possible, for example, by recognizing an object like the magazine (MAG) through image processing on an image captured by the camera 260 and estimating the posture of the recognized object. When the resolution of the camera 260 is sufficiently high, an image with sufficient quality can be displayed even when the object is deformed and expanded as in the image 2300d.

### (6. Annotation indication outside of displayable range)

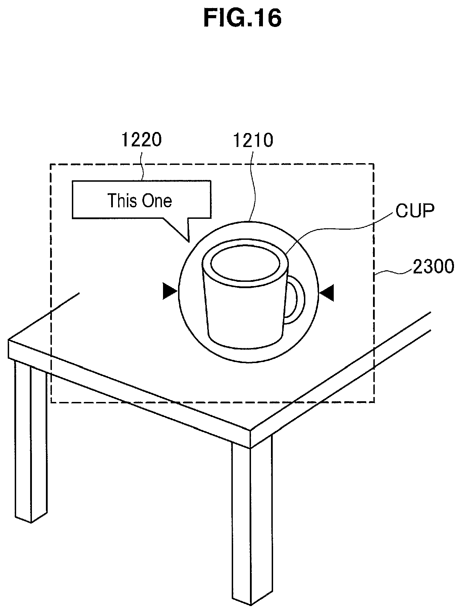

Next, an annotation indication outside of the displayable range according to the embodiment of the present disclosure will be described with reference to FIGS. 16 to 25. In the embodiment, as described above, the space information is added to image data of a real space transmitted in the transmission side device. When the space information is used, an annotation can be input for any position of the real space in the reception side device, irrespective of the display range of an image displayed with the transmission side device.

For example, in the above-described examples of FIGS. 7 to 10, an annotation is input for an object or a position in a real space which is included in an image captured by a camera but is distant from a display region of a display (including a case in which the position or the object is not visible) during display of a merge view in some cases. In such cases, it is difficult to display the annotation on the display. Therefore, the annotation is displayed on the display by switching the merge view to the camera view automatically or according to a manipulation input of the user or moving the position of the camera and/or the display.

In the foregoing cases, apart from the case in which the merge view is switched automatically to the camera view, there is a possibility of a time passing without including an annotation in the display range of the image 2300 when the user of the transmission side device (for example, hereinafter assumed to be the wearable terminal 200) is not aware of the presence of the annotation. Since the annotation displays, for example, information necessary for the user at that time in many cases, it is desirable for the user of the wearable terminal 200 to know the presence of the annotation.

Hence, in the embodiment, as illustrated in the following example, information regarding an annotation outside of a displayable range can be displayed. An indication of such information is a kind of annotation. However, in the following description, information set in an object or a position outside of the displayable range is particularly referred to as an annotation for discrimination. When such display is realized, the user of the wearable terminal 200 can easily determine whether the merge view is displayed or the camera view is displayed or in which direction the camera and/or the display is moved. Display control for such display may be performed by, for example, a processor of a device (for example, the wearable terminal 200 or the tablet terminal 300) displaying an annotation or may be performed by the processor of the server 100 recognizing a portion outside of a visible range in such a device.

### (First example)

FIGS. 16 to 18 are diagrams illustrating a first example of display of an annotation outside of a displayable range according to the embodiment of the present disclosure.

In FIG. 16, a display example in which an annotation can be displayed in the image 2300 is illustrated. In this case, the annotation is displayed for a target cup (CUP) put on a table and includes a pointer 1210 and a comment 1220.

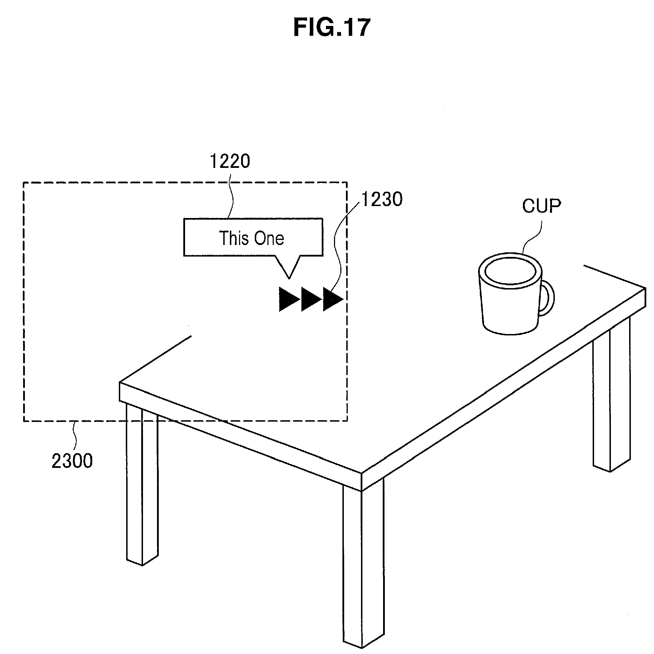

In FIG. 17, a display example in which the cup (CUP) which is a target of an annotation is not displayable in the image 2300 is illustrated. In this case, a direction indication 1230 denoting a direction toward a target of an annotation can be displayed instead of the annotation illustrated in FIG. 16. For example, the direction indication 1230 can be displayed by specifying a positional relation between the display range of the image 2300 and the target of the annotation based on the space information acquired by the wearable terminal 200. At this time, the comment 1220 in the annotation may be displayed along with the direction indication 1230. Since the comment 1220 is information indicating content, a kind, or the like of the annotation, it is useful to display the comment 1220 along with the direction indication 1230 rather than the pointer 1210.

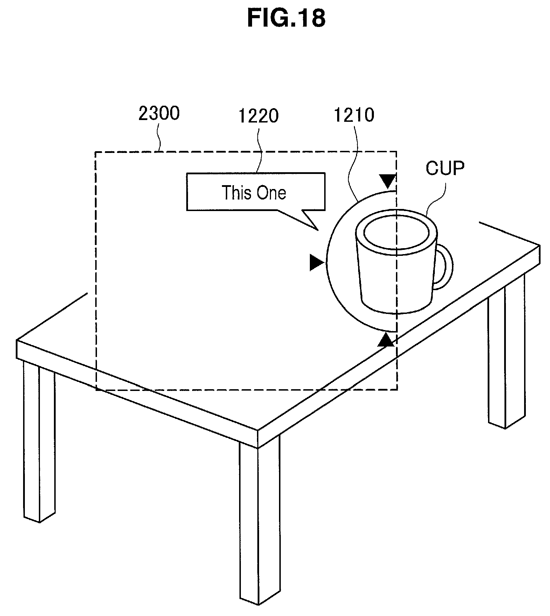

In FIG. 18, a display example in which the display range of the image 2300 is moved when, for example, the user of the wearable terminal 200 changes the direction of the camera 260 according to the direction indication 1230, and a part of the annotation can be displayed in the image 2300 is illustrated. In this case, even when the entire annotation is not displayable in the image 2300, a part of the pointer 1210 and the comment 1220 may be displayed as annotations.

### (Second example)

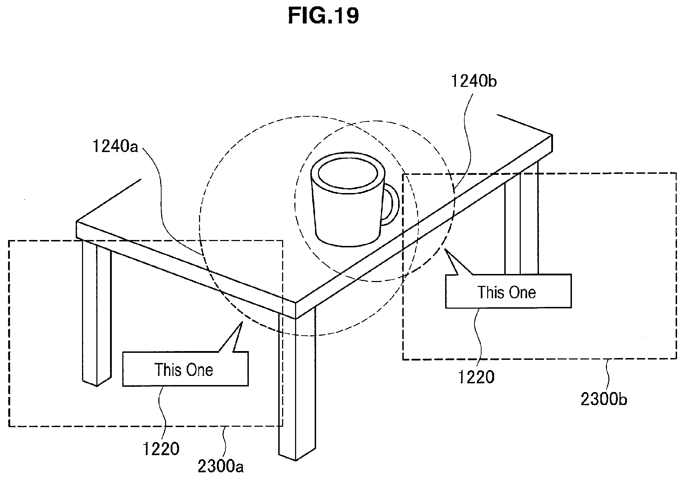

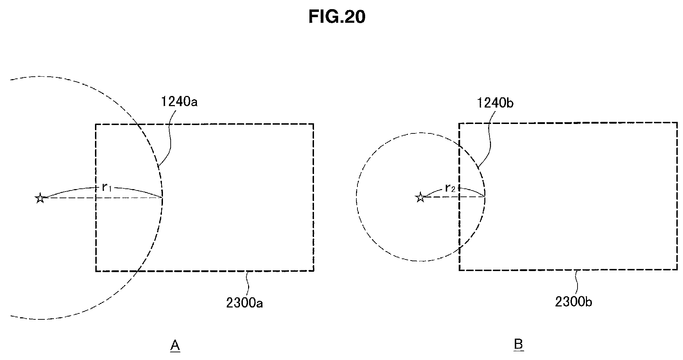

FIGS. 19 and 20 are diagrams illustrating a second example of the display of an annotation outside of a displayable range according to the embodiment of the present disclosure. In the second example, a target of the annotation is outside of the displayable range, and a distance up to the target of the annotation is displayed.

FIG. 19 is a diagram illustrating an example of display of two images of which distances from the displayable range to the target of the annotation are different. In this example, the fact that the annotation is outside of the displayable range of the image 2300 is displayed by circles 1240. The circles 1240 are displayed with radii according to the distances from the target of the annotation to the display range of the image 2300, as illustrated in FIG. 20. As illustrated in FIG. 20A, when the distance from the target of the annotation to the display range (image 2300a) is large, a circle 1240a with a larger radius r1 is displayed. As illustrated in FIG. 20B, when the distance from the target of the annotation to the display range (image 2300b) is small, a circle 1240b with a smaller radius r2 is displayed. The radius r of the circle 1240 may be set continuously according to the distance to the target of the annotation or may be set step by step. As illustrated in FIG. 19, the comments 1220 in the annotations may be displayed along with the circle 1240.

Thus, when the circles 1240 are displayed, for example, the user viewing the image 2300 can intuitively comprehend not only that the annotation is outside of the displayable range but also whether the annotation is displayed when the display range of the image 2300 is moved in a certain direction to a certain extent.

### (Third example)

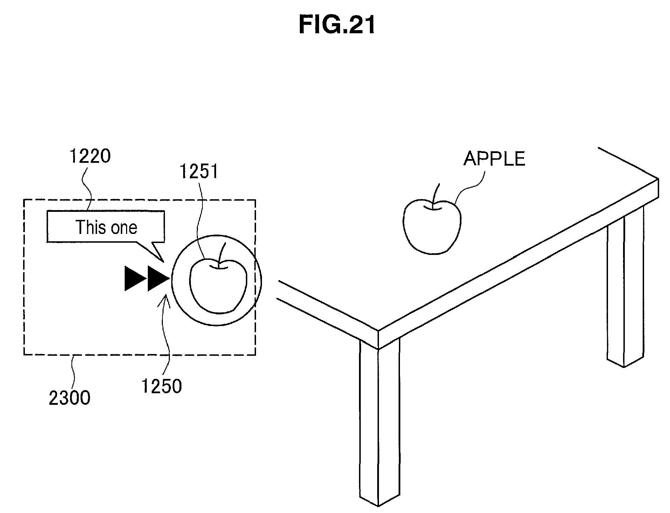

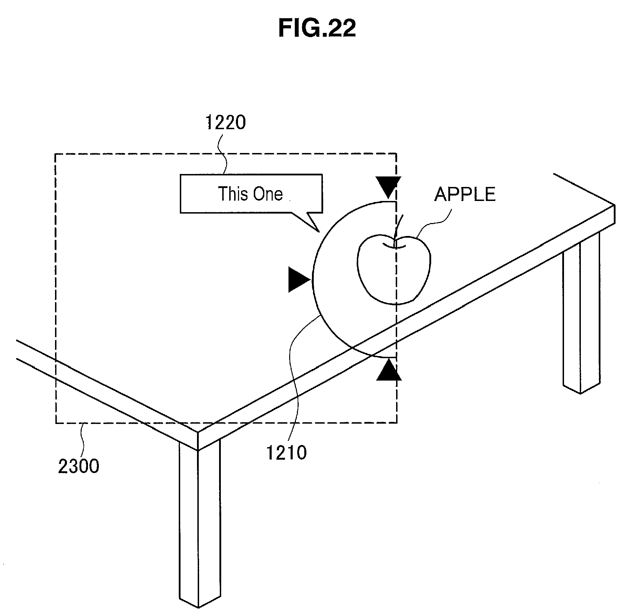

FIGS. 21 and 22 are diagrams illustrating a third example of the display of an annotation outside of a displayable range according to the embodiment of the present disclosure.

In FIG. 21, a display example in which an apple (APPLE) which is a target of the annotation is outside of the image 2300 and not included in a visible range is illustrated. In this case, an icon 1251 of a target can be displayed along with the same direction indication 1250 as that of the example of FIG. 17. For example, the icon 1251 can be generated by cutting the portion of the apple APPLE from an image captured by the camera 260 by the processor of the wearable terminal 200 or the server 100 when the apple (APPLE) is included in the image previously or currently captured by the camera 260. In this case, the icon 1251 may not necessarily be changed according to a change in a frame image acquired by the camera 260 and may be, for example, a still image. Alternatively, when the apple APPLE is recognized as an object, an illustration or a photo representing the apple may be displayed as the icon 1251 irrespective of the image captured by the camera 260. At this time, the comment 1220 in the annotations may be displayed along with the direction indication 1250 and the icon 1251.

In FIG. 22, a display example in which the display range of the image 2300 is moved when, for example, the user of the wearable terminal 200 changes the direction of the camera 260 according to the direction indication 1250, and a part of the annotation can be displayed in the image 2300 is illustrated. In this case, the display of the direction indication 1250 and the icon 1251 may end and a part of the pointer 1210 and the comment 1220 may be displayed as annotations as in the example of FIG. 18.

Thus, when the icon 1251 is displayed, for example, the user viewing the image 2300 can comprehend not only that the annotation is outside of the displayable range (also can be outside of the visible range) but also the target of the annotation, and thus can easily decide a behavior of viewing the annotation immediately or viewing the annotation later.

### (Fourth example)

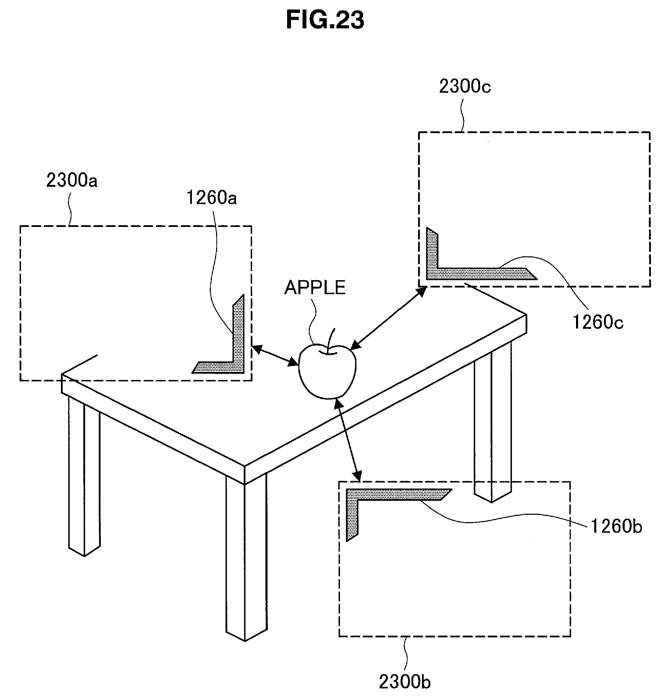

FIG. 23 is a diagram illustrating a fourth example of display of an annotation outside of a displayable range according to the embodiment of the present disclosure. In the illustrated example, when the apple (APPLE) which is a target of the annotation is outside of the image 2300, an end portion 1260 of the image 2300 closer to the apple shines. For example, since the apple is located to the lower right of a screen in an image 2300a, a lower right end portion 1260a shines. Since the apple is located to the upper left of the screen in an image 2300b, an upper left end portion 1260b shines. Since the apple is located to the lower left the screen in an image 2300c, a lower left end portion 1260c shines.

In the foregoing example, the region of the end portion 1260 can be set based on a direction toward the target of the annotation in a view from the image 2300. The example of the oblique directions is illustrated in the drawing. In another example, the left end portion 1260 may shine when the apple is to the left of the image 2300. In this case, the end portion 1260 may be the entire left side of the image 2300. When the target of the annotation is in an oblique direction and the end portion 1260 including a corner of the image 2300 shines, a ratio between the vertical portion and the horizontal portion of the corner of the end portion 1260 may be set according to an angle of the direction toward the target of the annotation. In this case, for example, when the target is to the upper left but further up, the horizontal portion (extending along the upper side of the image 2300) can be longer than the vertical portion (extending along the left side of the image 2300) of the end portion 1260. In contrast, when the target is to the upper left but further left, the vertical portion (extending along the left side of the image 2300) can be longer than the horizontal portion (extending along the upper side of the image 2300) of the end portion 1260. In another example, the end portion 1260 may be colored with a predetermined color (which can be a transparent color) instead of the end portion 1260 shining.

Thus, when the user is notified that the annotation is outside of the displayable range by the change in the display of the end portion 1260, for example, a separate direction indication such as an arrow may not be displayed. Therefore, the user can be notified of the presence of the annotation without the display of the image 2300 being disturbed.

### (Fifth example)

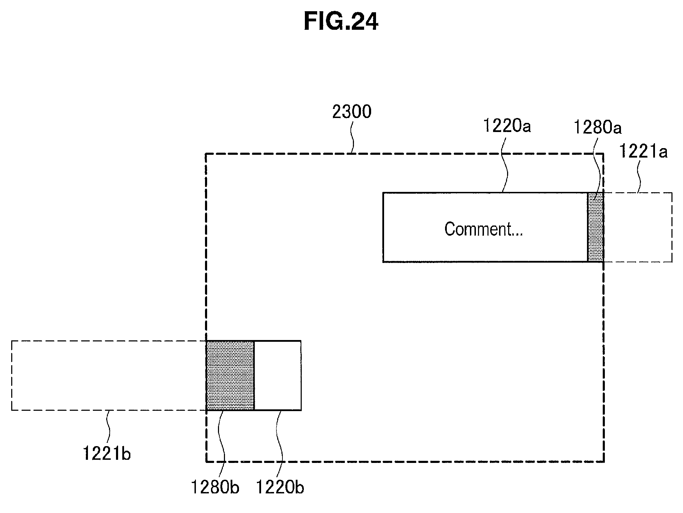

FIG. 24 is a diagram illustrating a fifth example of display of an annotation outside of a displayable range according to the embodiment of the present disclosure. In the illustrated example, the comment 1220 is displayed as an annotation. However, since the comment 1220 is long horizontally, the entire comment 1220 is not displayed in the image 2300. In the drawing, a non-display portion 1221 occurring due to the long comment is also illustrated. The non-display portion 1221 of the comment 1220 in this case can also be said to be an annotation outside of the displayable range. To indicate the presence of the non-display portion 1221, a luminous region 1280 is displayed in a portion in which the comment 1220 comes into contact with an end of the image 2300.

Here, the length of the luminous region 1280 can be set according to the length (for example, which may be expressed with the number of pixels in the longitudinal direction or may be expressed in accordance with a ratio of the non-display portion to a display portion of the comment 1220 or a ratio of the non-display portion to another non-display portion 1221) of the non-display portion 1221. In the illustrated example, a luminous region 1280a is displayed in regard to a non-display portion 1221a of a comment 1220a and a luminous region 1280b is displayed in regard to a non-display portion 1221b of a comment 1220b. However, the luminous region 1280b may be displayed to be longer than the luminous region 1280a by reflecting the fact that the non-display portion 1221b is longer than the non-display portion 1221a.

Thus, when the user is notified that the annotation is outside of the displayable range through the display of the luminous region 1280, the display can be completed inside the comment 1220 which is an annotation. Therefore, the user can be notified of the presence of the annotation without the display of the image 2300 being disturbed. When the length of the luminous region 1280 is set according to the length of the non-display portion 1221, the user can intuitively comprehend that the entire comment 1220 is long, and thus can easily decide, for example, a behavior of viewing the comment immediately or viewing the comment later. When the non-display portion 1221 of the comment 1220 is included in the display of the image 2300, for example, the display range of the image 2300 may be moved or the comment 1220 may be dragged to the inside (in the illustrated example, to the left in the case of the comment 1220a or to the right in the case of the comment 1220b) of the image 2300.

### (Sixth example)

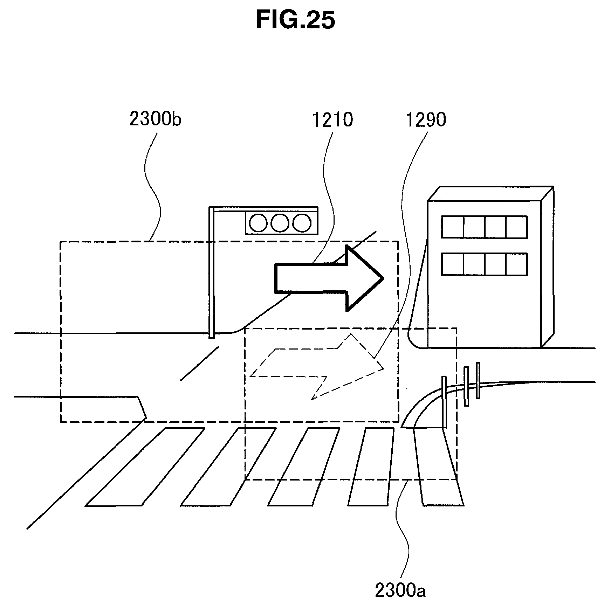

FIG. 25 is a diagram illustrating a sixth example of display of an annotation outside of a displayable range according to the embodiment of the present disclosure. In the illustrated example, the arrow annotation 1210 indicating a direction in road guidance is displayed. The annotation 1210 can be viewed, for example, when the user views the image 2300b. However, the annotation 120 may not be viewed when the user views the image 2300a. Accordingly, when the user views the image 2300a, a shadow 1290 of the annotation 1210 can be displayed. When the shadow 1290 is displayed, the user viewing the image 2300a can recognize that the annotation is above a screen.

Thereafter, when the user views the image 2300b, the display of the shadow 1290 may end or may continue. When the shadow 1290 continues to be displayed along with the annotation 1210 and the shadow 1290 is displayed, the user can easily recognize the position of the annotation 1210 disposed in the air in the depth direction.

Thus, by displaying the shadow 1290, the user can be notified of the presence of the annotation through the display without a sense of discomfort from a restriction to a direction of a virtual light source.

### (7. Supplement)

An embodiment of the present disclosure can include, for example, the above-described display control device (a server or a client), the above-described system, the above-described display control method executing the image processing device or the system, a program causing the display control device to function, and a non-transitory medium recording the program.

The preferred embodiments of the present disclosure have been described above with reference to the accompanying drawings, whilst the present disclosure is not limited to the above examples, of course. A person skilled in the art may find various alterations and modifications within the scope of the appended claims, and it should be understood that they will naturally come under the technical scope of the present disclosure.

Additionally, the present technology may also be configured as below.
(1) A display control device including:
   a display control unit configured to control a display unit of a terminal device to display an image of a real space in which the terminal device is present,
   wherein the display control unit selects an image to be displayed by the display unit from a first image which has continuity with the image of the real space viewed in a region other than the display unit and a second image which is generated based on a captured image of the real space and is independent from the image of the real space viewed in the region other than the display unit.
(2) The display control device according to (1),
   wherein the second image includes a broader range of the real space than the first image, and
   wherein the display control unit causes the display unit to display the first image including a virtual object set for the captured image when a position of the real space at which the virtual object is disposed is included in a range of the first image, and causes the display unit to display the second image including the virtual object when the position of the real space at which the virtual object is disposed is not included in the range of the first image and is included in a range of the second image.
(3) The display control device according to (2), wherein the display control unit displays the first image by superimposing the virtual object on the image of the real space transmitted in the display unit.
(4) The display control device according to (2), wherein the display control unit displays, as the first image, an image in which the virtual object is added to an image obtained by deforming the captured image in a manner that the captured image is coordinated with the image of the real space viewed in the region other than the display unit.
(5) The display control device according to (2), wherein the display control unit causes the display unit to display the first image when the virtual object is not set.
(6) The display control device according to (1), wherein the display control unit displays the first image by transmitting the image of the real space in the display unit.
(7) The display control device according to (1), wherein the display control unit displays, as the first image, an image obtained by deforming the captured image in a manner that the captured image is coordinated with the image of the real space viewed in the region other than the display unit.
(8) The display control device according to (7),
   wherein the display unit is able to transmit the image of the real space, and
   wherein the display control unit decides how to deform the captured image to coordinate the captured image with the image of the real space by comparing a first shape of a graphic in the real space when the graphic is transmitted through the display unit and viewed to a second shape of the graphic included in the captured image.
(9) The display control device according to (8), wherein the display control unit causes the display unit to display a criterion line indicating the fixed first shape and compares the first shape to the second shape when the graphic transmitted through the display unit and viewed matches the criterion line.
(10) The display control device according to any one of (1) and (6) to (9), further including:
   a manipulation acquisition unit configured to acquire information based on a user manipulation in the terminal device,
   wherein the display control unit causes the display unit to display one of the first and second images according to the user manipulation.
(11) The display control device according to (10),
   wherein the second image includes a broader range of the real space than the first image, and
   wherein the display control unit displays a notification indicating presence of a virtual object set for the captured image in the first image when the first image is displayed on the display unit and a position of the real space at which the virtual object is disposed is not included in a range of the first image and is included in a range of the second image.
(12) The display control device according to (11), wherein the display control unit displays the notification when all of the virtual object is outside of the range of the first image.
(13) The display control device according to (12), wherein the notification includes an indication denoting a direction toward the virtual object in a view from the range of the first image.
(14) The display control device according to (13), wherein the notification includes an indication denoting a distance between the range of the first image and the virtual object.
(15) The display control device according to (12),
   wherein the virtual object includes a pointer indicating the position of the real space at which the virtual object is disposed and information regarding the position, and
   wherein the notification includes the information.
(16) The display control device according to (12), wherein the notification includes an image of the real space at the position of the real space at which the virtual object is disposed, the image being extracted from the captured image.
(17) The display control device according to any one of (1) and (6) to (10), wherein the second image is an image obtained by expanding the captured image using a real object in the real space as a criterion.
(18) The display control device according to (17), wherein the display control unit generates the second image by deforming and expanding a portion of the first image which includes at least the real object to align the real object.
(19) A display control method including:
   selecting, by a processor configured to control a display unit of a terminal device to display an image of a real space in which the terminal device is present, an image to be displayed by the display unit from a first image which has continuity with the image of the real space viewed in a region other than the display unit and a second image which is generated based on a captured image of the real space and is independent from the image of the real space viewed in the region other than the display unit.
(20) A program causing a computer configured to control a display unit of a terminal device to display an image of a real space in which the terminal device is present to realize:
   a function of selecting an image to be displayed by the display unit from a first image which has continuity with the image of the real space viewed in a region other than the display unit and a second image which is generated based on a captured image of the real space and is independent from the image of the real space viewed in the region other than the display unit.

### Reference Signs List

- 10: system
- 100: server
- 200, 300, 400, 500, 600, 700: client
- 900: device
- 910: processor
- 920: memory
- 930: display unit
- 940: manipulation unit
- 950: communication unit
- 960: imaging unit
- 970: sensor

## Claims

1. A display control device comprising:
a display control unit configured to control a display unit of a terminal device to display an image of a real space in which the terminal device is present,
wherein the display control unit selects an image to be displayed by the display unit from a first image which has continuity with the image of the real space viewed in a region other than the display unit and a second image which is generated based on a captured image of the real space and is independent from the image of the real space viewed in the region other than the display unit.

2. The display control device according to claim 1,
wherein the second image includes a broader range of the real space than the first image, and
wherein the display control unit causes the display unit to display the first image including a virtual object set for the captured image when a position of the real space at which the virtual object is disposed is included in a range of the first image, and causes the display unit to display the second image including the virtual object when the position of the real space at which the virtual object is disposed is not included in the range of the first image and is included in a range of the second image.

3. The display control device according to claim 2, wherein the display control unit displays the first image by superimposing the virtual object on the image of the real space transmitted in the display unit.

4. The display control device according to claim 2, wherein the display control unit displays, as the first image, an image in which the virtual object is added to an image obtained by deforming the captured image in a manner that the captured image is coordinated with the image of the real space viewed in the region other than the display unit.

5. The display control device according to claim 2, wherein the display control unit causes the display unit to display the first image when the virtual object is not set.

6. The display control device according to claim 1, wherein the display control unit displays the first image by transmitting the image of the real space in the display unit.

7. The display control device according to claim 1, wherein the display control unit displays, as the first image, an image obtained by deforming the captured image in a manner that the captured image is coordinated with the image of the real space viewed in the region other than the display unit.

8. The display control device according to claim 7,
wherein the display unit is able to transmit the image of the real space, and
wherein the display control unit decides how to deform the captured image to coordinate the captured image with the image of the real space by comparing a first shape of a graphic in the real space when the graphic is transmitted through the display unit and viewed to a second shape of the graphic included in the captured image.

9. The display control device according to claim 8, wherein the display control unit causes the display unit to display a criterion line indicating the fixed first shape and compares the first shape to the second shape when the graphic transmitted through the display unit and viewed matches the criterion line.

10. The display control device according to claim 1, further comprising:
a manipulation acquisition unit configured to acquire information based on a user manipulation in the terminal device,
wherein the display control unit causes the display unit to display one of the first and second images according to the user manipulation.

11. The display control device according to claim 10,
wherein the second image includes a broader range of the real space than the first image, and
wherein the display control unit displays a notification indicating presence of a virtual object set for the captured image in the first image when the first image is displayed on the display unit and a position of the real space at which the virtual object is disposed is not included in a range of the first image and is included in a range of the second image.

12. The display control device according to claim 11, wherein the display control unit displays the notification when all of the virtual object is outside of the range of the first image.

13. The display control device according to claim 12, wherein the notification includes an indication denoting a direction toward the virtual object in a view from the range of the first image.

14. The display control device according to claim 13, wherein the notification includes an indication denoting a distance between the range of the first image and the virtual object.

15. The display control device according to claim 12,
wherein the virtual object includes a pointer indicating the position of the real space at which the virtual object is disposed and information regarding the position, and
wherein the notification includes the information.

16. The display control device according to claim 12, wherein the notification includes an image of the real space at the position of the real space at which the virtual object is disposed, the image being extracted from the captured image.

17. The display control device according to claim 1, wherein the second image is an image obtained by expanding the captured image using a real object in the real space as a criterion.

18. The display control device according to claim 17, wherein the display control unit generates the second image by deforming and expanding a portion of the first image which includes at least the real object to align the real object.

19. A display control method comprising:
selecting, by a processor configured to control a display unit of a terminal device to display an image of a real space in which the terminal device is present, an image to be displayed by the display unit from a first image which has continuity with the image of the real space viewed in a region other than the display unit and a second image which is generated based on a captured image of the real space and is independent from the image of the real space viewed in the region other than the display unit.

20. A program causing a computer configured to control a display unit of a terminal device to display an image of a real space in which the terminal device is present to realize:
a function of selecting an image to be displayed by the display unit from a first image which has continuity with the image of the real space viewed in a region other than the display unit and a second image which is generated based on a captured image of the real space and is independent from the image of the real space viewed in the region other than the display unit.
